# EUROPÄISCHE PATENTSCHRIFT

(11) **EP 4 322 048 B1**
(45) Veröffentlichungstag und Bekanntmachung des Hinweises auf die Patenterteilung: **30.04.2025**
(21) Anmeldenummer: 22213957.8
(22) Anmeldetag: 15.12.2022
(51) Int. Cl.: G06K 7/00

(54) **VORRICHTUNG MIT EINEM RFID-LESER, MIT EINEM ANZEIGEDISPLAY, MIT EINEM TOUCH-SENSOR UND MIT WENIGSTENS EINER ANTENNE**
DEVICE HAVING AN RFID READER, HAVING A DISPLAY DISPLAY, HAVING A TOUCH SENSOR AND HAVING AT LEAST ONE ANTENNA
DISPOSITIF COMPRENANT UN LECTEUR RFID, UN ÉCRAN D'AFFICHAGE, UN CAPTEUR TACTILE ET AU MOINS UNE ANTENNE

(30) Priorität: 11.08.2022 DE 102022120361
(43) Veröffentlichungstag der Anmeldung: 14.02.2024
(73) Patentinhaber: Feig Electronic GmbH, 35781 Weilburg-Waldhausen (DE)
(72) Erfinder: Endres, Simon, 35781 Weilburg (DE); Keller, Rafael, 35781 Weilburg (DE); Stillger, Lukas, 35781 Weilburg (DE)
(74) Vertreter: Knefel, Cordula

(56) Entgegenhaltungen:
- US-A1- 2013 229 362

## Beschreibung

Die Erfindung betrifft eine Vorrichtung mit einem RFID-Leser, mit einem Anzeigedisplay, mit einem Touch-Sensor und mit wenigstens einer Antenne.

RFID-Leser mit Anzeigedisplay finden in der Praxis unter anderem Anwendung im Bereich von verschiedenen Automaten, z.B. Getränke- oder Zigarettenautomaten oder auch im Bereich von Ladesäulen für Elektrofahrzeuge.

Da es sich hier um Anwendungen im öffentlichen Bereich handelt, werden auch gewisse Anforderungen an die Sicherheit gegenüber Vandalismus an die Geräte gestellt. Zum Schutz des Anzeigedisplays, des Touch-Sensors, der Antenne und des RFID-Lesers kommt vorwiegend Verbund-Sicherheitsglas zum Einsatz. Die Anforderungen werden meist mit sogenannten IK-Tests überprüft. Hierbei wird zwischen verschiedenen Sicherheitsklassen, z.B. IK9 oder IK10 unterschieden.

Zum Stand der Technik (US 8,220,719 B2) gehört ein RFID-Zahlungsendgerät mit einer in einer Anzeige eingebetteten RFID-Antenne.

Diese zum Stand der Technik gehörende Vorrichtung weist ein Display auf, zum Beispiel eine Flüssigkristallanzeige, die ein Dünnfilm-Transistormaterial (TFT-Material) enthalten kann. Die Antenne ist in einem Teil der Anzeige eingebettet. Da die Antenne eine Größe aufweisen soll, die ungefähr der Größe einer Bezahlkarte entspricht, muss die Antenne in der Anzeige eingebettet sein, da die Anzeige größer ist als eine Bezahlkarte. Da die Antenne in der Anzeige eingebettet ist, ist die Antenne aus einem weitgehend durchsichtigen Material gebildet. Diese Ausführungsform weist den Nachteil auf, dass das Material, welches weitgehend durchsichtig ist, sehr teuer ist. Darüber hinaus treten Probleme auf, da Kopplungen zwischen der Antenne und den elektronischen Bauteilen auftreten.

Weiterhin gehört zum Stand der Technik (US 7,928,965 B2) eine handgehaltene Mehrfachberührungsvorrichtung, die einen RFID-Leser mit Anzeigedisplay, nämlich einer Flüssigkeitskristallanzeige aufweist. Darüber hinaus ist ein Berührungssensorfeld vorgesehen sowie ein Touch-Sensor und eine Antenne zum Erfassen von Kredit-, Debit- oder Geschenkkarten.

Diese zum Stand der Technik gehörende Vorrichtung weist den Nachteil auf, dass auch hier Kopplungen zwischen der Antenne und den elektronischen Bauteilen auftreten.

Weiterhin gehört zum Stand der Technik (US 6,275,157 B1) eine Fahrzeugwindschutzscheibe, in der ein RFID-Transponder eingebettet ist, der es ermöglicht, fahrzeugbezogene Daten leicht zu speichern, fernzugreifbar zu machen und zu aktualisieren.

Bei dieser Vorrichtung handelt es sich nicht um einen RFID-Leser, sondern lediglich um den Transponder, der mit einem entsprechenden RFID-Leser ausgelesen werden kann.

Darüber hinaus gehört zum Stand der Technik (US 2017/0357351 A1) eine Nahfeld-Kommunikationstechnologie kombiniert mit Berührungssensoren, die zum Beispiel in kontaktlosen Chipkarten zu finden sind. Es wird eine Nahfeld-Kommunikationsantenne vorgesehen, um eine Nahfeld-Kommunikationstechnologie, Berührungssensortechnologie und Anzeigetechnologie zu realisieren. Die Antenne ist um einen Umfang des Berührungssensors und des Anzeigeschirms zum Senden angeordnet und es ist darüber hinaus eine kleinere Nahfeld-Kommunikationsantenne vorgesehen, die unter oder auf dem Berührungssensor zum Empfang von Nahfeld-Kommunikationssignalen ausgebildet ist.

Auch dieses System kann hinsichtlich der Kopplung der Antennen mit einem gleichzeitigen nicht zu großen Aufbau verbessert werden.

Zum Stand der Technik (DE 10 2017 123 324 A1) gehört darüber hinaus ein elektronisches Gerät mit einer transparenten Antenne. Dieses elektronische Gerät kann beispielsweise eine Uhr sein. Diese Vorrichtung weist zwar eine Anzeigeeinheit und einen Berührungsbildschirm auf. Ein RFID-Leser ist gemäß diesem Stand der Technik jedoch nicht offenbart.

Weiterhin gehört zum Stand der Technik (US 2013/0229362 A1) eine Touchpanel-Struktur mit einem Antennenmuster. Die Touchpanel-Struktur umfasst einen Rahmen, ein in dem Rahmen angeordnetes Anzeigemodul, ein auf dem Anzeigemodul angeordnetes Berührungsmodul und ein Antennenmuster. Ein RFID-Leser ist gemäß diesem Stand der Technik jedoch nicht offenbart.

Das der Erfindung zu Grunde liegende technische Problem besteht darin, eine Vorrichtung mit einem RFID-Leser, mit einem Anzeigedisplay, mit einem Touch-Sensor, mit wenigstens einer Antenne und mit zwei Glasscheiben anzugeben, die einen kompakten Aufbau aufweist und bei der die Antenne gleichzeitig einen ausreichenden Abstand zum Touch-Sensor und zum Anzeigedisplay aufweist, um einerseits Kopplungen zu vermeiden und andererseits zu vermeiden, dass die Ausbreitung des magnetischen Feldes der RFID-Antenne durch den Touch-Sensor und das Anzeigedisplay beeinflusst oder bedämpft wird.

Dieses technische Problem wird durch eine Vorrichtung mit den Merkmalen gemäß Anspruch 1 gelöst.

Die erfindungsgemäße Vorrichtung mit einem RFID-Leser, mit einem Anzeigedisplay, mit einem Touch-Sensor, mit wenigstens einer Antenne und mit zwei Glasscheiben, bei der die wenigstens eine Antenne zwischen den zwei Glasscheiben angeordnet ist, wobei die Vorrichtung im Querschnitt in einer X-Richtung folgenden Aufbau, mit wenigstens folgenden Komponenten aufweist:
- eine erste Glasscheibe,
- eine Klebeschicht,
- eine in oder an der Klebeschicht angeordnete Antenne,
- eine zweite Glasscheibe,
- eine erste Schicht mit einem transparenten Klebstoff,
- einen Touch-Sensor,
- eine zweite Schicht mit einem transparenten Klebstoff,
- ein Display mit einem Anzeigebereich und einem sichtbaren Bereich, wobei der sichtbare Bereich zumindest als ein Teilbereich des Anzeigebereiches ausgebildet ist,
und wobei die Antenne in Draufsicht auf das Display zumindest den sichtbaren Bereich des Displays freilassend ausgebildet ist, zeichnet sich dadurch aus, dass wenigstens ein die Antenne in Draufsicht auf die Vorrichtung abdeckendes Passepartout vorgesehen ist.

Dadurch, dass die Antenne zwischen der ersten Glasscheibe und der zweiten Glasscheibe angeordnet ist, ist die Antenne mit einem ausreichend großen Abstand zu den elektronischen Komponenten, wie Touch-Sensor und Anzeigedisplay angeordnet. Die Antenne ist dadurch, dass sie zwischen der ersten und der zweiten Glasscheibe angeordnet ist, auch mit Abstand zu mechanischen Komponenten, wie einem Metallrahmen oder einem Schirmblech mit Abstand angeordnet. Damit ist der Einfluss dieser Komponenten auf das magnetische Feld der Antenne möglichst gering. Darüber hinaus weist die Vorrichtung einen kompakten Aufbau auf, dadurch, dass die Antenne zwischen den Glasscheiben angeordnet ist.

Die erfindungsgemäße Vorrichtung weist zwei Glasscheiben auf, die miteinander verklebt sind. Hierdurch ist gewährleistet, dass die Vorrichtung den erforderlichen Schutz gegen Vandalismus aufweist. Sollte die erste Glasscheibe zerstört werden, bietet die zweite Glasscheibe Schutz gegen die Zerstörung der Komponenten Sensor und Display. Durch die Klebefolie zwischen den Glasscheiben ist sichergestellt, dass beim Zerstörungsversuch des Gerätes mögliche Splitter der ersten Glasscheibe von der ersten Folie gehalten werden. In den meisten Fällen ist die zweite Glasscheibe dann noch intakt und schützt den elektronischen Aufbau hinter der Glasscheibe. Sollten beide Glasscheiben zersplittern, werden die Splitter von der Folie gehalten.

Durch den erfindungsgemäßen Aufbau mit der Verklebung wird im gesamten Aufbau vermieden, dass Kondenswasser sich bilden kann oder Wasser von außen eindringt.

Das Vorsehen der zwei Glasscheiben bedeutet, dass die Vorrichtung einen Mindestquerschnitt aufweist. Um den Mindestquerschnitt nicht noch zu vergrößern, trotzdem die Antenne zu schützen und gleichzeitig zu gewährleisten, dass die Antenne einen ausreichenden Abstand zu den Komponenten Touch-Sensor und Display hat, ist es besonders vorteilhaft, die Antenne zwischen den Glasscheiben anzuordnen.

Das Display weist einen Anzeigebereich und einen sichtbaren Bereich auf. Der sichtbare Bereich ist Teil des Anzeigebereiches. Der sichtbare Bereich kann kleiner oder gleich groß sein wie der Anzeigebereich. Der sichtbare Bereich ist der Bereich, den eine Person, die die Vorrichtung nutzt, sieht.

Ein weiterer Vorteil der Erfindung besteht darin, dass von der Antenne eine Fläche umschlossen wird, die größer als eine Fläche des sichtbaren Bereiches ist. In Draufsicht auf das Display wird der sichtbare Bereich von der von der Antenne umschlossenen Fläche mindestens vollständig freigelassen. Das bedeutet, dass in Draufsicht auf die Vorrichtung (in X-Richtung) die Antenne den sichtbaren Bereich freilassend ausgebildet ist.

Der Vorteil dieser Ausbildung liegt darin, dass die Antenne aus einem üblichen preiswerten Material, wie beispielsweise Kupfer, gebildet werden kann. Die Antenne überdeckt nicht den sichtbaren Bereich und muss aus diesem Grunde nicht, wie beim Stand der Technik vorgesehen, aus einem durchsichtigen oder fast durchsichtigen Material gebildet werden, was sehr teuer ist. Kupfer weist darüber hinaus eine deutlich bessere elektrische Leitfähigkeit auf. Die Antenne weist hierdurch verbesserte Antenneneigenschaften auf, wie z.B. die Güte.

Die Schichten aus transparentem Klebstoff (Optical Bonding) sind vorgesehen zum Verringern des Reflexionsverlustes, der an der Grenzfläche des transparenten Schutzmaterials, wie der Glasscheibe erzeugt wird. Die Sichtbarkeit wird verbessert, indem der Spalt zwischen dem Touch-Sensor und der dem Touch-Sensor zugewandten Glasscheibe mit einem lichtdurchlässigen Material, beispielsweise einem Klebstoff, gefüllt wird, das einen Brechungsindex aufweist, der ähnlich oder äquivalent zu dem des transparenten Schutzmateriales, das heißt der Glasscheibe ist. Darüber hinaus wird ein Aufheizen der Anordnung verringert, da kein luftgefüllter Raum vorhanden ist. Durch den erfindungsgemäßen Aufbau wird auch die Dicke der Anordnung vergrößert, wodurch der Widerstand gegen Durchbiegen steigt.

Transparenter Klebstoff bedeutet, dass der Klebstoff im ausgehärteten Zustand, beispielsweise ein Flüssigkleber, oder im Gebrauchszustand, zum Beispiel eine Klebefolie, die fertig aufgebracht ist, transparent ist. Der Klebstoff ist optisch transparent.

Zwischen dem Touch-Sensor und dem Display mit dem Anzeigebereich ist eine zweite Schicht mit einem transparenten Klebstoff angeordnet. Auch diese transparente Schicht (Optical Bonding) ist so ausgestaltet, dass ein Reflexionsverlust minimiert wird.

Dadurch, dass die Antenne außerhalb des sichtbaren Bereiches und bevorzugt außerhalb des Anzeigebereiches des Displays angeordnet ist, tritt eine geringere Kopplung zwischen der Antenne und dem Display auf.
Gemäß der Erfindung ist die Antenne in Draufsicht auf das Display zumindest den sichtbaren Bereich des Displays freilassend ausgebildet. Das bedeutet, die Antenne in Draufsicht auf das Display in X-Richtung zumindest den sichtbaren Bereich des Displays freilassend ausgebildet ist.

Gemäß einer vorteilhaften Ausführungsform der Erfindung ist vorgesehen, dass die Antenne in X-Richtung mit Abstand zu dem Berührungssensor und dem Display angeordnet ist.

Durch diese Ausführungsform ist gewährleistet, dass die Kopplung zwischen der Antenne und dem Touch-Sensor sowie dem Anzeigebereich des Displays zumindest verringert oder sogar minimiert wird.

Die Antenne dient zur kontaktlosen Datenübertragung, insbesondere zum Lesen und/oder Beschreiben von kontaktlosen Datenträgern, sogenannten Transpondern.

Die Antenne muss möglichst gut auf die Betriebsfrequenz des RFID-Systems abgestimmt sein, um eine gute Kopplung und damit gute Energie- und Datenübertragung zu erreichen. Bei RFID-Lesern, die im Paymentbereich eingesetzt werden, soll zumindest eine gute Energie- und Datenübertragung erzielt werden. Die Anforderungen an die Feldstärke und Modulation sind nach EMVCo Level 1 ("EMV^{®} Contactless Specifications for Payment Systems") definiert. Ausgehend vom Zentrum des EMVCo Symbols wird ein Volumen mit mehreren Messpunkten definiert. Mit sogenannten Test PICCs werden an diesen Punkten Messwerte für die Feldstärke ermittelt, die in einem definierten Wertebereich liegen müssen.

Ist die Antenne zu dicht an dem Touch-Sensor und dem sichtbaren Bereich oder dem Anzeigebereich des Displays angeordnet, findet eine Kopplung statt und die Daten- und Energieübertragung der Antenne wird verringert oder gestört.

Gemäß einer weiteren vorteilhaften Ausführungsform der Erfindung ist der Anzeigebereich aus Flüssigkristall-Zellen, aus OLEDs, aus Mini- oder Mikro-LEDs gebildet.

Gemäß einer weiteren vorteilhaften Ausführungsform der Erfindung ist vorgesehen, dass die erste und/oder zweite Schicht mit einem optisch transparenten Klebstoff als Klebefolie und/oder aus flüssigem oder pastösem Klebstoff und/oder aus Kunstharz gebildet ist.

Das Optical Bonding, das heißt die Schicht aus transparentem Klebstoff, kann beispielsweise aus einem doppelseitigen Klebeband bestehen oder aus dem flüssigen oder pastösen Klebstoff. Bei einem Flüssigkleber muss ein Damm aufgebaut werden, damit der Flüssigkleber auf dem Untergrund, beispielsweise der Glasscheibe, aufgebracht wird. Unter Vakuum wird der Kleber dann glattgezogen.

Wichtig ist, dass eine Klebeschicht gebildet wird, die zum Verringern der Reflexionsverluste dient, der an der Grenzfläche des transparenten Materials erzeugt wird, sodass das Display erkennbar und die Informationen auf dem Display lesbar sind.

Gemäß einer weiteren vorteilhaften Ausführungsform ist vorgesehen, dass die Klebeschicht aus einer oder zwei Klebefolien gebildet ist. Zum Verbinden der beiden Glasscheiben kann vorteilhaft wenigstens eine Klebefolie verwendet werden, sodass die beiden Glasscheiben zu einer Verbund-Sicherheitsglasscheibe mit integrierter Antenne zusammengefügt werden können. Die Komponenten können unter anderem erwärmt und unter Vakuum oder Unterdruck miteinander verpresst werden, sodass sich eine luftblasenfreie vollständige transparente Verklebung ergibt.

Das bedeutet, dass die wenigstens eine Klebefolie transparent ausgebildet ist. Dies ist vorteilhaft, damit das Display, welches hinter den mit wenigstens einer Klebefolie verklebten Glasscheiben angeordnet ist, lesbar ist.

Sind zwei Klebefolien vorgesehen, kann die Antenne zwischen den beiden Klebefolien angeordnet werden.

Wird lediglich eine Klebefolie verwendet, kann die Antenne mit der ersten Glasscheibe verklebt werden. Anschließend wird vorteilhaft die Klebefolie auf der gesamten ersten Glasscheibe aufgebracht und kann hierbei die Antenne überdecken. Anschließend erfolgt das Verkleben mit der zweiten Glasscheibe.

Auch hierbei können die Komponenten erwärmt und unter Vakuum oder Unterdruck miteinander verpresst werden. Wichtig ist, dass sich eine luftblasenfreie vollständig transparente Verklebung ergibt.

Gemäß einer weiteren vorteilhaften Ausführungsform der Erfindung ist vorgesehen, dass die Klebeschicht einen UV-Filter und/oder einen IR-Filter aufweist.

Diese Ausführungsform weist den Vorteil auf, dass die hinter der Klebeschicht liegenden Komponenten gegenüber Umwelteinflüssen, das heißt beispielsweise Lichtschädigungen, geschützt sind. Hierdurch wird die Langlebigkeit der Vorrichtung, insbesondere des Touch-Panels und des Anzeigebereiches des Displays gefördert.

Gemäß der Erfindung ist vorgesehen, dass wenigstens ein die Antenne in Draufsicht auf die Vorrichtung abdeckendes Passepartout vorgesehen ist.

Diese Ausführungsform weist den Vorteil auf, dass Bereiche, die ein Benutzer der Vorrichtung nicht sehen soll, abgedeckt sind. Vorteilhaft befindet sich das Passepartout zwischen den beiden Glasscheiben und ist dadurch gegenüber Beschädigungen, zum Beispiel durch Vandalismus geschützt. Darüber hinaus stellt sich die Glasscheibe für den Benutzer optisch dünner dar.

Gemäß einer weiteren vorteilhaften Ausführungsform der Erfindung ist vorgesehen, dass das Passepartout zwischen den Glasscheiben angeordnet ist oder durch wenigstens eine Oberfläche der wenigstens einen Glasscheibe ausgebildet ist.

Gemäß einer ersten Ausführungsform kann das Passepartout als gesondertes Bauteil zwischen den Glasscheiben angeordnet werden, sodass wenigstens die Antenne abgedeckt ist in Draufsicht auf das Display (in X-Richtung).

Gemäß einer anderen vorteilhaften Ausführungsform der Erfindung ist vorgesehen, dass das Passepartout durch Bearbeiten wenigstens einer Oberfläche der wenigstens einen Glasscheibe ausgebildet ist. Soll das Passepartout die Antenne abdecken, ist die Oberfläche der ersten Glasscheibe bearbeitet, beispielsweise durch Ätzen, Schleifen oder Fräsen.

Sollen andere Bereiche abgedeckt werden, kann auch die zweite Glasscheibe entsprechend bearbeitet werden.

Gemäß einer weiteren vorteilhaften Ausführungsform der Erfindung ist vorgesehen, dass wenigstens eine Glasscheibe aus Sicherheitsglas und/oder gehärtetem Glas und/oder Verbundglas gebildet ist.

Grundsätzlich bilden die beiden Glasscheiben zusammen ein Verbundglas. Darüber hinaus kann eine Glasscheibe oder es können beide Glasscheiben aus Sicherheitsglas oder gehärtetem Glas oder nochmals aus Verbundglas gebildet sein. Verbundglas besteht aus mindestens zwei Glasscheiben.

Hierdurch werden die elektronischen Komponenten, wie Touch-Sensor und Display vor Vandalismus besser geschützt.

Gemäß einer weiteren vorteilhaften Ausführungsform ist vorgesehen, dass die Vorrichtung zusätzlich wenigstens ein Kameramodul und/oder wenigstens einen Annäherungssensor und/oder wenigstens einen Umgebungslichtsensor aufweist.

Mit dem Kameramodul können beispielsweise 2D-Barcodes für Bezahlvorgänge gelesen werden. Das Kameramodul kann in einer Aussparung einer Glasscheibe angeordnet sein. Es besteht auch die Möglichkeit, das Kameramodul hinter der zweiten Glasscheibe anzuordnen.

Es besteht auch die Möglichkeit, einen Annäherungssensor vorzusehen. Der Annäherungssensor dient dazu, die Vorrichtung beispielsweise aus einem Stand-by Modus in einen aktiven Modus zu versetzen. Hierdurch kann Energie gespart werden.

Weiterhin ist es möglich, einen sogenannten Ambient Light Sensor vorzusehen. Hierbei handelt es sich um einen Sensor zum Erfassen des Umgebungslichtes. Dieser Sensor kann vorteilhaft zur Helligkeitssteuerung des Displays verwendet werden. Die Helligkeit des Displays wird vorteilhaft an das Umgebungslicht angepasst. Hierdurch wird die Lebensdauer des Displays erhöht. Durch die Anpassung der Helligkeit wird die Lesbarkeit der Informationen auf dem Display verbessert.

Eine weitere vorteilhafte Ausführungsform der Erfindung sieht vor, dass ein Rahmen für die zwei Glasscheiben, die Antenne, den Touch-Sensor und das Display mit dem Anzeigebereich vorgesehen ist. Dieser Rahmen weist den Vorteil auf, dass die zwei Glasscheiben, die Antenne, der Touch-Sensor und das Display mit dem Anzeigebereich eine bauliche Einheit bilden. Diese bauliche Einheit kann gut für den weiteren Einbau in der Vorrichtung oder in einer externen Vorrichtung verwendet werden. Vorteilhaft ist eine komplett umlaufende Verklebung vorgesehen, um einen zusätzlichen Schutz gegenüber Umwelteinflüssen zu erreichen. Beispielsweise wird ein Schutz gegenüber Wasser und Fremdkörpern erzielt. Hierdurch wird beispielsweise der Eintritt von Wasser zwischen den Komponenten verhindert. Das Wasser würde zum einen die elektronischen Komponenten schädigen und zum anderen die Transparenz verringern.

Gemäß einer weiteren vorteilhaften Ausführungsform der Erfindung ist vorgesehen, dass die Antenne in X-Richtung mit einem Abstand zu dem Anzeigebereich des Displays angeordnet ist, und dass in einer Y-Richtung und in einer Z-Richtung der Abstand der Antenne zu dem sichtbaren Bereich ≥ 0 (Null) ist. Besonders vorteilhaft ist der Abstand der Antenne in Y-Richtung und in Z-Richtung zu dem sichtbaren Bereich ≥ 0 (Null).

Der Abstand in X-Richtung wird durch die Klebefolie und die zweite Glasscheibe sowie die erste und die zweite Schicht mit einem transparenten Klebstoff und dem Touch-Sensor bestimmt.

Je größer dieser Abstand zwischen der Antenne und dem sichtbaren Bereich, bevorzugt zu dem Anzeigebereich, in X-Richtung ist, umso kleiner kann der Abstand in Y- und Z-Richtung zwischen der Antenne und dem sichtbaren Bereich, bevorzugt zu dem Anzeigebereich, sein. In Y- und in Z-Richtung ist der Abstand jedoch größer 0 (Null), das heißt die Antenne überdeckt in X-Richtung nicht den sichtbaren Bereich, bevorzugt den Anzeigebereich. Die Antenne schließt eine Fläche ein, die größer ist als die Fläche des sichtbaren Bereiches, bevorzugt des Anzeigebereiches. Diese von der Antenne umschlossene Fläche ist in Draufsicht, das heißt in X-Richtung, auf den sichtbaren Bereich, bevorzugt den Anzeigebereich, so angeordnet, dass der sichtbare Bereich, bevorzugt der Anzeigebereich, vollständig von dieser Fläche freigelassen wird. Mit anderen Worten deckt die Antenne nicht den sichtbaren Bereich, bevorzugt den Anzeigebereich, ab.

Gemäß einer weiteren vorteilhaften Ausführungsform der Erfindung ist der Abstand in X-Richtung zwischen der Antenne und dem sichtbaren Bereich, bevorzugt zu dem Anzeigebereich, mit den Abständen in Y-Richtung und in Z-Richtung korrelierend ausgebildet.

Je größer der Abstand in X-Richtung ist, umso kleiner kann der Abstand in Y- und in Z-Richtung sein.

Gemäß einer vorteilhaften Ausführungsform der Erfindung ist jede Glasscheibe 1 bis 4 mm dick. Die wenigstens eine Klebefolie zwischen den Glasscheiben ist vorteilhaft 0,2 bis 1,6 mm dick. Die erste und die zweite Schicht mit einem transparenten Klebstoff sind jeweils vorteilhaft zwischen 0,05 und 0,7 mm dick.

Gemäß einer besonders bevorzugten Ausführungsform beträgt die Dicke der zwei Glasscheiben, der wenigstens einen Klebefolie und der beiden Schichten mit einem transparenten Klebstoff maximal 7 mm. Es handelt sich hierbei um die Dicke im Querschnitt, das heißt die Dicke in X-Richtung.

Als Randbedingungen für die Abstände
- x horizontaler Abstand der Antenne zu dem sichtbaren Bereich, bevorzugt zu dem Anzeigebereich (Active Area), bezogen auf den Querschnitt der Vorrichung,
- y vertikaler Abstand der Antenne zu dem sichtbaren Bereich, bevorzugt zu dem Anzeigebereich und
- z horizontaler Abstand der Antenne zu dem sichtbaren Bereich, bevorzugt zu dem Anzeigebereich, senkrecht zu X- und Y-Richtung
ergeben sich vorteilhaft folgende voneinander unabhängige Punkte:
1. Der maximale Ausschnitt einer Vorrichtung, in den der Rahmen passen muss, ist vorteilhaft hergeleitet aus Industriestandards für Automatenausschnitte.
2. Relevant ist der x-, y- und z- Abstand zwischen Antenne und Anzeigebereich des Displays und zwischen Antenne und Touch-Sensor, um gegenseitige Störungen zwischen Antenne und Touch-Sensor sowie Antenne und Display zu minimieren.
3. Der sichtbare Bereich, bevorzugt der Anzeigebereich, muss vorteilhaft so groß sein, dass eine Ziffer zur Pineingabe lesbar und drückbar ist.
4. Der Parallaxenfehler des Gesamtaufbaus muss vorteilhaft klein genug sein, dass eine Ziffer zur Pineingabe lesbar und drückbar ist.
5. Der Abstand des Touch-Sensors zur Vorderseite der ersten Scheibe ist vorteilhaft nicht größer, als der Touch-Sensor auswerten kann. Dieser Abstand ist vorteilhaft maximal 10mm.
6. Vorteilhaft weisen Displays eine Diagonale von 3 Zoll bis 5 Zoll auf.
7. Die Anforderung einer dicken Glasscheibe als Verbundglas, um schlagfest zu sein, eines kompakten Aufbaus und RFID-Funktionalität ergibt sich aus dem Anwendungsgebiet "Unbeaufsichtigte Pineingabe".
8. Es muss Platz für eine Rahmenkonstruktion bleiben (innerhalb des Industriestandardausschnitts), um alle Anforderungen zu erfüllen (Sicherheit, IK10 Schlag, Montageoptionen, etc.).

Die Antenne arbeitet vorzugsweise im HF-Bereich (Hochfrequenzbereich).

Weitere Merkmale und Vorteile der Erfindung ergeben sich anhand der zugehörigen Zeichnungen, in denen verschiedene Ausführungsformen einer erfindungsgemäßen Vorrichtung mit RFID-Leser nur beispielhaft dargestellt sind, ohne die Erfindung auf diese Ausführungsbeispiele zu beschränken. In den Zeichnungen zeigen:
- Fig. 1: einen schematischen Aufbau einer erfindungsgemäßen Vorrichtung;
- Fig. 2: einen Querschnitt durch die Vorrichtung gemäß einem ersten Ausführungsbeispiel;
- Fig. 3: einen Querschnitt durch die Vorrichtung gemäß einem zweiten Ausführungsbeispiel;
- Fig. 4: einen Querschnitt durch eine erfindungsgemäße Vorrichtung gemäß einem weiteren Ausführungsbeispiel;
- Fig. 5: einen Querschnitt durch ein weiteres Ausführungsbeispiel der erfindungsgemäßen Vorrichtung;
- Fig. 6: ein geändertes Ausführungsbeispiel mit einer Antenne, die den Anzeigebereich teilweise überdeckt;
- Fig. 7: eine Draufsicht auf die erfindungsgemäße Vorrichtung;
- Fig. 8: eine Draufsicht auf die erfindungsgemäße Vorrichtung mit der Darstellung einer Antenne und einem Anzeigebereich und einem sichtbaren Bereich;
- Fig. 9: ein EMVCo Symbol in Draufsicht;
- Fig. 10: eine Darstellung eines Volumens mit mehreren Messpunkten.

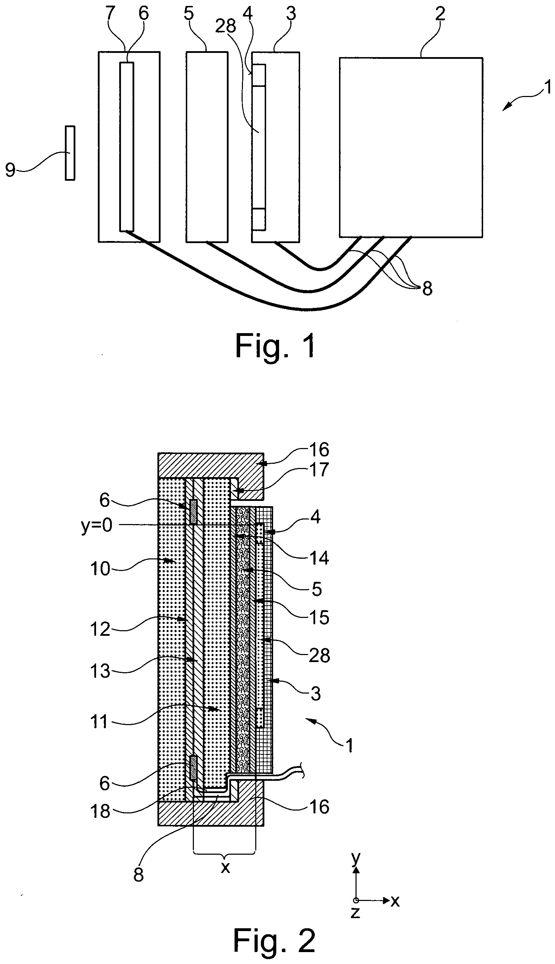

Fig. 1 zeigt die erfindungsgemäße Vorrichtung 1, die einen RFID-Leser 2 ein Display 3, in dem ein Anzeigebereich 4 und ein in dem Anzeigebereich 4 angeordneter sichtbarer Bereich 28 angeordnet ist, einen Touch-Sensor 5, eine Antenne 6 und ein Sicherheitsglas 7 aufweist. Das Display 3 mit den Anzeigebereich 4, der Touch-Sensor 5 und die Antenne 6 sind über Leitungen 8 mit dem RFID-Leser 2 verbunden. Die Leitungen 8 dienen zum einen zur Stromversorgung der einzelnen Komponenten und zum anderen auch zum Datenaustausch zwischen den einzelnen Komponenten. Im vorliegenden Fall weist der RFID-Leser 2 zusätzlich einen Controller (nicht dargestellt) für die Steuerung des Touch-Sensors 5 und des Displays 3 auf. Es besteht jedoch auch die Möglichkeit, einen extern angeordneten Controller vorzusehen.

Die Antenne 6 erzeugt im vorliegenden Fall im HF-Bereich (Hochfrequenzbereich) ein magnetisches Wechselfeld zur Energie- und Datenübertragung zu einem Transponder 9, der ebenfalls lediglich schematisch dargestellt ist.

Der vorliegende RFID-Leser 2 kann in Paymentsystemen oder als Paymentsystem verwendet werden. Hierbei werden gewisse Anforderungen an die erzeugten Feldstärken, die Feldverteilung und weitere Übertragungsparameter gestellt. Der RFID-Leser 2 kann zum Beispiel die EMV-Contactless Level 1 erfüllen.

Da sowohl das Display 3 als auch der Touch-Sensor 4 der Ausbreitung des magnetischen Feldes der Antenne 6 entgegenwirken, muss eine geeignete Größe und Position der Antenne 6 vorgesehen sein, um die geforderten Feldstärkewerte und Übertragungsparameter zu erreichen. Gleichzeitig wird die Sicherheitsglasscheibe 7 zum Schutz von Antenne 6, Touch-Sensor 5, Display 3 mit Anzeigebereich 4 und RFID-Leser 2 vorgesehen. Um die geforderten Parameter zu erfüllen, werden optimale Positionen aller Komponenten vorgesehen. Zum einen muss die Antenne 6 einen ausreichenden Abstand zum Touch-Sensor 5 und zum Display 3 haben, damit der Einfluss dieser Komponenten auf das magnetische Feld der Antenne 6 möglichst gering ist. Zum anderen soll die Vorrichtung 1 einen kompakten Aufbau aufweisen, sodass der Abstand der Antenne 6 zum Touch-Sensor 5 und zum Display 3 nicht zu groß ist.

Aus diesem Grunde ist gemäß der Erfindung vorgesehen, die Antenne 6 in der Sicherheitsglasscheibe 7 anzuordnen.

Fig. 2 zeigt einen Querschnitt durch die erfindungsgemäße Vorrichtung 1. Der Aufbau wird in X-Richtung von links nach rechts erläutert.

Die Vorrichtung 1 weist zwei Glasscheiben 10, 11 auf. Zwischen den Glasscheiben 10, 11 sind zwei Klebefolien 12, 13 angeordnet. Zwischen den Klebefolien 12, 13 ist die Antenne 6 angeordnet. Mit den Klebefolien 12, 13 werden die Glasscheiben 10, 11 miteinander verklebt. Die Glasscheibe 11 ist mittels einer Schicht 14 mit einem transparenten Klebstoff mit dem Touch-Sensor 5 verklebt. Bei dem Touch-Sensor 5 kann es sich um einen kapazitiven Berührungssensor handeln (projected capacitive Touch-Sensor (PCAP)).

Der Touch-Sensor 5 ist mittels einer zweiten Schicht 15 mit einem transparenten Klebstoff mit dem Display 3 verbunden. In dem Display 3 ist ein Anzeigebereich 4 angeordnet. Ein Teil des Anzeigebereiches 4 ist ein sichtbarer Bereich 28. Der sichtbare Bereich 28 ist für eine Person, die die Vorrichtung 1 benutzt, sichtbar. Der sichtbare Bereich 28 ist in Fig. 1 kleiner als der Anzeigebereich 4. Alternativ besteht die Möglichkeit, den gesamten Anzeigebereich 4 als sichtbaren Bereich 28 auszugestalten.

Bei dem Anzeigebereich 4 handelt es sich um den aktiven Anzeigebereich des Displays 3. Zusätzlich ist ein Rahmen 16 vorgesehen. Der Rahmen 16 fasst die beiden Glasscheiben 10, 11 und die Klebefolien 12, 13 mit der Antenne 6 zu einer Einheit zusammen. Es ist eine Verklebung 17 zwischen dem Rahmen 16 und der Glasscheibe 11 vorgesehen. Darüber hinaus ist eine Aussparung 18 für einen Antennenanschluss mit den Leitungen 8 vorgesehen.

Um einen kompakten Aufbau der Vorrichtung 1 zu erreichen, ist die Antenne 6 zwischen den Glasscheiben 10, 11 angeordnet. Die elektrischen Verbindungen zwischen dem RFID-Leser 2, der in Figur 2 nicht dargestellt ist, und den Komponenten Display 3 mit Anzeigebereich 4, Touch-Sensor 5 und Antenne 6 sind in Figur 2 ebenfalls nicht dargestellt. Es sind lediglich die Leitungen 8 dargestellt, die zur Antenne 6 führen.

Die Antenne 6 kann aus Drähten und/oder Kupferblech und/oder einer Leiterplatte und/oder einer sogenannten Flex-Leiterplatte und/oder aus einer Kombination aus den genannten Varianten bestehen.

Zum Verbinden der beiden Glasscheiben 10, 11, mit den Klebefolien 12, 13 und der Antenne 6 zu einer Verbund-Sicherheitsglasscheibe 7 mit integrierter Antenne 6 können die Komponenten unter anderem erwärmt und unter Vakuum miteinander verpresst werden, sodass sich eine luftblasenfreie vollständig transparente Verklebung ergibt.

Der Touch-Sensor 5 und das Display 3 mit dem Anzeigebereich 4 werden mittels der Schicht 15 mit transparentem Klebstoff mit der Glasscheibe 11 verbunden.

Die Dicke der beiden Glasscheiben 10, 11 beträgt vorteilhaft zwischen 1 mm und 4 mm, damit zum einen die Anforderungen an die Eigenschaften der Antenne und zum anderen die mechanischen Anforderungen an das Verbund-Sicherheitsglas erfüllt werden. Die Glasscheiben 10, 11 können dabei unterschiedliche Dicken aufweisen.

Durch den in Fig. 2 gezeigten Aufbau ist es möglich, eine Vorrichtung 1 anzugeben, welche in einen Automatenausschnitt, zum Beispiel mit Standardmaßen passt und die Anforderungen nach EMVCo, Common. SECC-DK, PCI und MasterCard TQM erfüllt.

Wie in Fig. 2 zu erkennen ist, weist die Antenne 6 einen Abstand x zu dem Anzeigebereich 4 des Displays 3 auf.

Ein Abstand y in Y-Richtung zwischen der Antenne 6 und Anzeigebereich 4 beträgt gemäß Fig. 2 Null.

Die Glasscheiben 10, 11 können aus gehärtetem Glas bestehen. Es kann eine Glasscheibe oder es können beide Glasscheiben 10, 11 aus gehärtetem Glas bestehen. Hierdurch wird eine zusätzliche Kratzfestigkeit und erhöhte Feuerfestigkeit für Verbund-Sicherheitsglas erreicht.

Die Klebefolie 12 und/oder die Klebefolie 13 können einen UV-Filter aufweisen. Dies führt zu einem zusätzlichen UV-Schutz der Komponenten Touch-Sensor 5, der Anzeigebereich 4 und der Schichten 14, 15 mit transparentem Kleber.

Die Klebefolie 12 und/oder die Klebefolie 13 können einen zusätzlichen Infrarotfilter aufweisen. Dies führt zu einem zusätzlichen IR-Schutz der Komponenten der Vorrichtung 1.

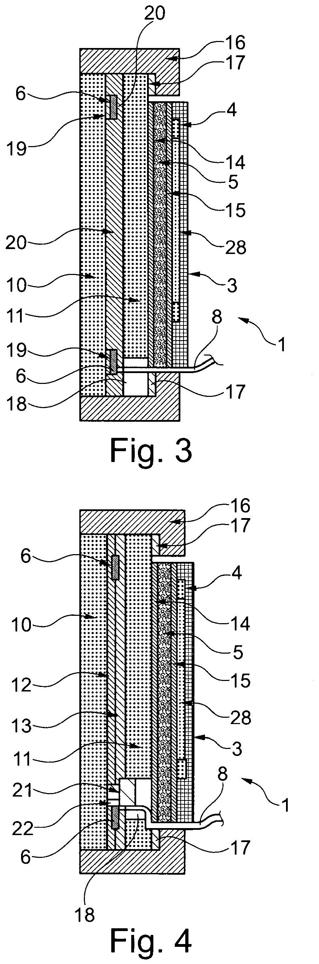

Fig. 3 zeigt eine weitere Ausführungsform bezüglich der Vorrichtung 1. In den Figuren sind gleiche Teile mit gleichen Bezugszeichen versehen.

Bei dieser Ausführungsform ist die Antenne 6 mit einer Klebefolie 19, vorzugsweise einer dünnen Klebefolie 19 an der Glasscheibe 10 befestigt. Zwischen den beiden Glasscheiben 10, 11 befindet sich lediglich eine Klebefolie 20. Zwischen der Antenne 6 und der Glasscheibe 11 kann sich dabei auch noch eine dünne Schicht der Klebefolie 20 befinden.

Zum Verbinden der beiden Glasscheiben 10, 11 mit der Folie 20 und der Antenne 6 zu einer Verbund-Sicherheitsglasscheibe mit integrierter Antenne 6 können die Komponenten unter anderem erwärmt und unter Vakuum oder Unterdruck miteinander verpresst werden. Die Folien 19, 20 können Klebefolien oder Folien ohne Klebeschicht sein. Es ergibt sich hierbei eine luftblasenfreie vollständig transparente Verklebung.

Fig. 4 zeigt ein geändertes Ausführungsbeispiel, welches dem grundsätzlichen Aufbau gemäß Fig. 2 entspricht. Zusätzlich ist ein Kameramodul 21 vorgesehen. Im Bereich des Kameramoduls 21 werden die Glasscheibe 11 und die Klebefolien 12, 13 an der Position des Kameramoduls 21 ausgespart. Die Glasscheibe 10 dient zum Schutz des Kameramoduls 21. Das Kameramodul 21 ist in einer Aussparung 22 in dem Aufbau aus Klebefolien 12, 13 und der Glasscheibe 11 angeordnet. Anstelle des Kameramoduls 21 oder auch zusätzlich kann ein Ambient Light Sensor, das heißt ein Sensor zum Erfassen des Umgebungslichtes vorgesehen sein. Dieser Sensor ist in Fig. 4 nicht dargestellt. Er kann zum Beispiel bei der Helligkeitsteuerung des Displays 3 verwendet werden.

Anstelle des Kameramoduls 21 oder zusätzlich neben dem Kameramodul 21 kann sich auch ein Annährungssensor (nicht dargestellt) in der Vorrichtung 1 befinden. Auch eine Kombination aus zwei oder drei der genannten Sensoren ist möglich. Somit sind zum Beispiel Auswertungen möglich, um zu unterscheiden, ob sich eine Bezahlkarte oder eine Hand einer Bedienperson oder ein RFID-Transponder vor der Vorrichtung 1 befindet.

Die Einheit aus den Glasscheiben 10, 11, Antenne 6, Touch-Sensor 5 und Display 3 mit Anzeigebereich 4 kann, wie in den Fig. 2 bis 4 dargestellt, mittels eines Klebers 17 komplett umlaufend in den zusätzlichen Rahmen 16 geklebt werden. Mit der umlaufenden Verklebung wird ein zusätzlicher Schutz gegenüber Wasser und Fremdkörpern erreicht.

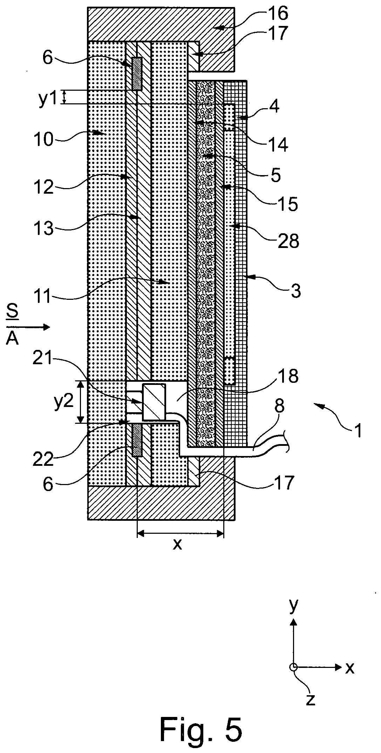

Fig. 5 zeigt ein geändertes Ausführungsbeispiel der Vorrichtung 1.

In X-Richtung weist die Antenne 6 einen Abstand x von dem Anzeigebereich 4 auf. In Y-Richtung weist die Antenne 6 zu dem Anzeigebereich 4 einen Abstand y1 und einen Abstand y2 auf. Der Abstand y1 und der Abstand y2 zwischen der Antenne 6 und dem Anzeigebereich 4 ist größer 0 (Null).

Wird der Abstand y1 und y2 größer, kann der Abstand x kleiner werden, ohne dass unerwünschte Kopplungen zwischen der Antenne 6 und dem Anzeigebereich 4 auftreten.

In die Zeichenebene hinein ist die Z-Richtung dargestellt. Das für die Abstände y1 und y2 Ausgeführte gilt auch für nicht dargestellte Abstände z in Z-Richtung.

Die Vorrichtung 1 wird von der Seite S von einer Bedienperson bedient oder es wird auf der Seite S eine Bezahlkarte oder ein RFID-Transponder 9 vor der Vorrichtung 1 angeordnet.

Dadurch, dass die Abstände y1 und y2 größer Null ausgestaltet sind, lässt die Antenne 6 den Anzeigebereich 4 frei. Dies gilt ebenso für die Z-Richtung. Das Freilassen des Anzeigebereiches 4 und damit auch des sichtbaren Bereiches 28 ist bezogen auf die Richtung des Pfeiles A, nämlich die X-Richtung.

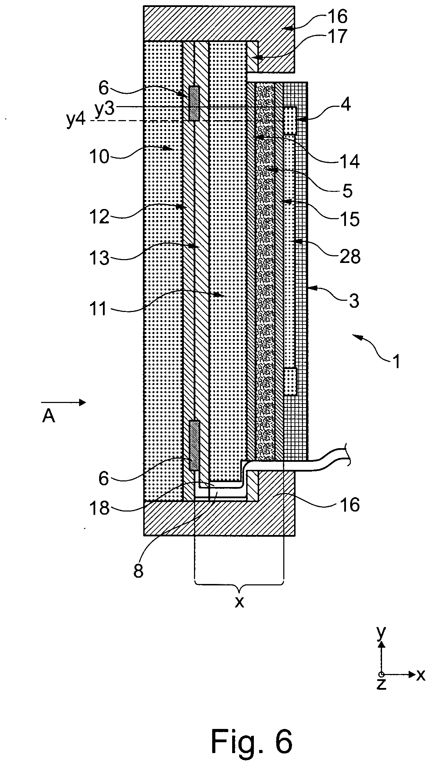

Fig. 6 zeigt ein geändertes Ausführungsbeispiel der Vorrichtung 1 aus Fig. 2. Gleiche Teile sind mit gleichen Bezugszahlen versehen.

Die Antenne 6 deckt in Richtung des Pfeiles A gesehen einen Teil des Anzeigebereiches 4 ab. Der abgedeckte Bereich ist durch den Abstand der Linien y3 und y4 dargestellt. Der sichtbare Bereich 28 ist von der Antenne in Richtung des Pfeiles A gesehen nicht abgedeckt. Der sichtbare Bereich 28 ist in Richtung des Pfeiles A gesehen von der Antenne 6 freilassend ausgebildet.

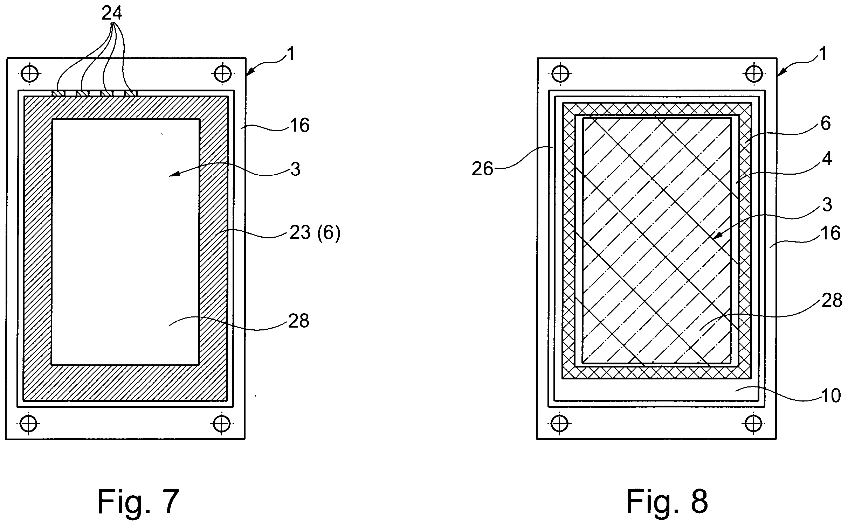

Fig. 7 zeigt die Vorrichtung 1. Die Vorrichtung 1 weist den Rahmen 16 sowie ein Passepartout 23 und einen sichtbaren Bereich 28 auf. Vor dem Display 3 sind die Glasscheiben 10, 11 angeordnet, die in Fig. 7 nicht näher gekennzeichnet sind. Hinter dem Passepartout 23 ist die Antenne 6 angeordnet. Die Antenne 6 ist aufgrund des Passepartouts 23 für den Benutzer, der auf die Vorrichtung 1 schaut, nicht zu erkennen.

Die Vorrichtung 1 weist darüber hinaus Leuchten 24 auf, die beispielsweise als LEDs ausgebildet sein können. Die LEDs können verschiedene Farben annehmen und einen Transaktionsprozess kennzeichnen. Es besteht auch die Möglichkeit, die Anzeige für den Transaktionsprozess im Display darzustellen. In diesem Fall können im Display beispielsweise vier grüne Punkte nacheinander aufleuchten.

Das in Fig. 7 dargestellte Passepartout 23 kann als ein schwarzes oder dunkles Passepartout ausgebildet sein. Das Passepartout 23 kann zwischen den Glasscheiben 10, 11 angeordnet sein. Das Passepartout 23 dient dazu, Bereiche, die ein Benutzer nicht sehen soll, abzudecken. Da sich das Passepartout 23 zwischen beiden Glasscheiben 10, 11 befindet, ist es gegenüber Beschädigungen, zum Beispiel Vandalismus geschützt. Außerdem stellen sich die Glasscheiben 10, 11 für den Benutzer optisch dünner dar.

Das Passepartout 23 kann auch durch Bearbeiten der Glasscheibe 10 und/oder der Glasscheibe 11, zum Beispiel durch Ätzen, Schleifen oder Fräsen, ausgebildet sein. Das Passepartout 23 dient dazu, Bereiche, die der Benutzer nicht sehen soll, abzudecken.

Fig. 8 zeigt die Vorrichtung 1. In Fig. 8 ist kein Passepartout in dem Display 3 dargestellt. In Figur 8 ist zur Veranschaulichung der Anordnung der Antenne 6 zu dem sichtbaren Bereich 28 des Displays 3 auf die Darstellung des Passepartouts verzichtet worden. Wie in Fig. 8 zu erkennen ist, lässt die Antenne 6 den sichtbaren Bereich 28 frei. Die Antenne 6 deckt den sichtbaren Bereich 28 nicht ab. Das bedeutet, dass in Draufsicht auf die Vorrichtung 1 die Antenne 6 den sichtbaren Bereich 28 vollständig freilassend ausgebildet ist.

Die Vorrichtung 1 weist den Rahmen 16 auf sowie die Antenne 6. Der Anzeigebereich 4 ist größer als der sichtbare Bereich 28. Der Anzeigebereich 4 wird in Draufsicht auf die Vorrichtung 1 teilweise von der Antenne 6 überdeckt. Die Glasscheibe 10 deckt die Antenne 6 und das Display 3 ab und schützt diese vor Umwelteinflüssen oder Vandalismus.

Sämtliche Ausführungsformen, die in den Figuren dargestellt sind, können auch miteinander kombiniert werden.

Eine Dichtung 26 dichtet die Vorrichtung 1 gegen äußere Umwelteinflüsse, wie Feuchtigkeit und Wasser ab.

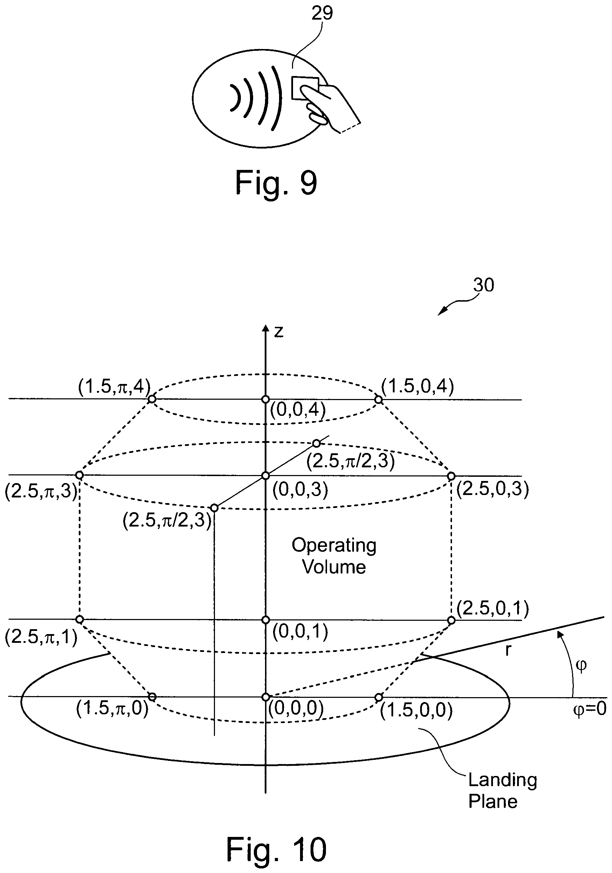

Fig. 9 zeigt ein EMVCo Symbol 29. Die Antenne 6 (in Fig. 9 nicht dargestellt) muss möglichst gut auf die Betriebsfrequenz des RFID-Systems abgestimmt sein, um eine gute Kopplung und damit eine gute Energie- und Datenübertragung zu erreichen. Bei RFID-Lesern, die im Paymentbereich eingesetzt werden, soll zumindest eine gute Energie- und Datenübertragung erzielt werden. Die Anforderungen an die Feldstärke und Modulation sind nach EMVCo Level 1 definiert. Ausgehend vom Zentrum des EMVCo Symbols 29 wird ein Volumen, welches in Fig. 10 dargestellt ist, mit mehreren Messpunkten definiert. Mit sogenannten Test PICCs werden an diesen Punkten Messwerte für die Feldstärke ermittelt, die in einem definierten Wertbereich liegen müssen.

### Bezugszahlen

- 1: Vorrichtung
- 2: RFID-Leser
- 3: Display
- 4: Anzeigebereich
- 5: Touch-Sensor
- 6: Antenne
- 7: Sicherheitsglasscheibe
- 8: Leitungen
- 9: Transponder
- 10: Glasscheibe
- 11: Glasscheibe
- 12: Klebefolie
- 13: Klebefolie
- 14: erste Schicht mit transparentem Klebstoff
- 15: zweite Schicht mit transparentem Klebstoff
- 16: Rahmen
- 17: Verklebung
- 18: Verklebung
- 19: Klebefolie
- 20: Klebefolie
- 21: Kameramodul
- 22: Aussparung
- 23: Passepartout
- 24: Leuchten
- 26: Dichtung
- 28: sichtbarer Bereich
- 29: EMVCo Symbol
- 30: Volumen mit Messpunkten
- S: Seite
- x: Abstand
- y1: Abstand
- y2: Abstand
- y3: Linie
- y4: Linie
- A: Pfeil

## Patentansprüche

1. Vorrichtung (1) mit einem RFID-Leser, mit einem Anzeigedisplay, mit einem Touch-Sensor, mit wenigstens einer Antenne und mit zwei Glasscheiben, bei der die wenigstens eine Antenne zwischen den zwei Glasscheiben angeordnet ist, wobei die Vorrichtung im Querschnitt in einer X-Richtung folgenden Aufbau mit wenigstens folgenden Komponenten aufweist:
- eine erste Glasscheibe (10),
- eine Klebeschicht (12, 13; 19, 20),
- eine in oder an der Klebeschicht (12, 13; 19, 20) angeordnete Antenne (6),
- eine zweite Glasscheibe (11),
- eine erste Schicht (14) mit einem transparenten Klebstoff,
- einen Touch-Sensor (5),
- eine zweite Schicht (15) mit einem transparenten Klebstoff,
- ein Display (3) mit einem Anzeigebereich (4) und einem sichtbaren Bereich (28), wobei der sichtbare Bereich (28) zumindest als ein Teilbereich des Anzeigebereiches (4) ausgebildet ist,
und wobei die Antenne (6) in Draufsicht auf das Display (3) zumindest den sichtbaren Bereich (28) des Displays (3) freilassend ausgebildet ist,
**dadurch gekennzeichnet , dass** wenigstens ein die Antenne (6) in Draufsicht auf die Vorrichtung (1) abdeckendes Passepartout (23) vorgesehen ist.

2. Vorrichtung nach Anspruch 1, **dadurch gekennzeichnet, dass** die Antenne (6) in X-Richtung mit Abstand zu dem Touch-Sensor (5), dem Anzeigebereich (4) und dem Display (3) angeordnet ist.

3. Vorrichtung nach einem der vorhergehenden Ansprüche, **dadurch gekennzeichnet, dass** die erste und/oder zweite Schicht (14, 15) mit einem transparenten Klebstoff als Klebefolie ausgebildet ist und/oder aus flüssigem oder pastösem Klebstoff und/oder aus Kunstharz gebildet ist.

4. Vorrichtung nach einem der vorhergehenden Ansprüche, **dadurch gekennzeichnet, dass** die Klebeschicht (12, 13; 19, 20) aus ein oder zwei Klebefolien gebildet ist.

5. Vorrichtung nach einem der vorhergehenden Ansprüche, **dadurch gekennzeichnet, dass** die Klebeschicht (12, 13; 19, 20) einen UV-Filter und/oder einen IR-Filter aufweist.

6. Vorrichtung nach Anspruch 1, **dadurch gekennzeichnet, dass** das Passepartout (23) zwischen den Glasscheiben (10, 11) angeordnet ist oder durch Bearbeiten wenigstens einer Oberfläche wenigstens einer Glasscheibe (10, 11) ausgebildet ist.

7. Vorrichtung nach einem der vorhergehenden Ansprüche, **dadurch gekennzeichnet, dass** wenigstens eine Glasscheibe (10, 11) aus Sicherheitsglas oder gehärtetem Glas oder Verbundglas gebildet ist.

8. Vorrichtung nach einem der vorhergehenden Ansprüche, **dadurch gekennzeichnet, dass** die Vorrichtung (1) zusätzlich wenigstens ein Kameramodul (21) und/oder wenigstens einen Annäherungssensor und/oder wenigstens einen Umgebungslichtsensor aufweist.

9. Vorrichtung nach einem der vorhergehenden Ansprüche, **dadurch gekennzeichnet, dass** ein Rahmen (16) für die zwei Glasscheiben (10, 11), die Antenne (6), den Touch-Sensor (5) und das Display (3) mit dem Anzeigebereich (4) vorgesehen ist.

10. Vorrichtung nach einem der vorhergehenden Ansprüche, **dadurch gekennzeichnet, dass** die Antenne (6) in X-Richtung mit einem Abstand (x) zu dem Anzeigebereich (4) mit dem sichtbaren Bereich (28) angeordnet ist, und dass in einer Y-Richtung und in einer Z-Richtung der Abstand der Antenne (6) zu dem sichtbaren Bereich (28) ≥ 0 ist.

11. Vorrichtung nach Anspruch 10, **dadurch gekennzeichnet, dass** der Abstand (x) in X-Richtung mit den Abständen (y, z) in Y-Richtung und in Z-Richtung korrelierend ausgebildet ist.

## Claims

1. Apparatus (1) with an RFID reader, with a display, with a touch sensor, with at least one antenna and with two glass panes, in which the at least one antenna is arranged between the two glass panes, wherein the apparatus in cross section in an X direction comprises the following structure with at least the following components:
- a first glass pane (10),
- an adhesive layer (12, 13; 19, 20),
- an antenna (6) arranged in or on the adhesive layer (12, 13; 19, 20),
- a second glass pane (11),
- a first layer (14) with a transparent adhesive,
- a touch sensor (5),
- a second layer (15) with a transparent adhesive,
- a display (3) with a display region (4) and a visible region (28), wherein the visible region (28) is formed at least as a subregion of the display region (4),
and wherein the antenna (6) in top view of the display (3) is designed to leave free at least the visible region (28) of the display (3),
**characterized in that** at least one mount (23) which covers the antenna (6) in top view of the apparatus (1) is provided.

2. Apparatus according to Claim 1, **characterized in that** the antenna (6) in the X direction is arranged at a distance from the touch sensor (5), the display region (4) and the display (3).

3. Apparatus according to either of the preceding claims, **characterized in that** the first and/or second layer (14, 15) is formed with a transparent adhesive as an adhesive film and/or is formed from liquid or pasty adhesive and/or from synthetic resin.

4. Apparatus according to one of the preceding claims, **characterized in that** the adhesive layer (12, 13; 19, 20) is formed from one or two adhesive films.

5. Apparatus according to one of the preceding claims, **characterized in that** the adhesive layer (12, 13; 19, 20) comprises a UV filter and/or an IR filter.

6. Apparatus according to Claim 1, **characterized in that** the mount (23) is arranged between the glass panes (10, 11) or is formed by processing at least one surface of at least one glass pane (10, 11).

7. Apparatus according to one of the preceding claims, **characterized in that** at least one glass pane (10, 11) is formed from safety glass or tempered glass or laminated glass.

8. Apparatus according to one of the preceding claims, **characterized in that** the apparatus (1) additionally comprises at least one camera module (21) and/or at least one proximity sensor and/or at least one ambient light sensor.

9. Apparatus according to one of the preceding claims, **characterized in that** a frame (16) for the two glass panes (10, 11), the antenna (6), the touch sensor (5) and the display (3) with the display region (4) is provided.

10. Apparatus according to one of the preceding claims, **characterized in that** the antenna (6) in the X direction is arranged at a distance (x) from the display region (4) with the visible region (28), and **in that** in a Y direction and in a Z direction, the distance of the antenna (6) from the visible region (28) is ≥ 0.

11. Apparatus according to Claim 10, **characterized in that** the distance (x) in the X direction is formed so as to correlate with the distances (y, z) in the Y direction and in the Z direction.

## Revendications

1. Dispositif (1) comprenant un lecteur RFID, un écran d'affichage, un capteur tactile, au moins une antenne et deux vitres, dans lequel ladite au moins une antenne est agencée entre les deux vitres, le dispositif présentant en coupe transversale dans une direction X la structure suivante, avec au moins les composants suivants :
- une première vitre (10),
- une couche adhésive (12, 13 ; 19, 20),
- une antenne (6) agencée dans ou sur la couche adhésive (12, 13 ; 19, 20),
- une deuxième vitre (11),
- une première couche (14) avec un adhésif transparent,
- un capteur tactile (5),
- une deuxième couche (15) avec un adhésif transparent,
- un écran (3) avec une zone d'affichage (4) et une zone visible (28), la zone visible (28) étant conçue au moins sous la forme d'une partie de la zone d'affichage (4),
et l'antenne (6) étant conçue de manière à laisser libre au moins la zone visible (28) de l'écran (3) en vue en plan de l'écran (3),
**caractérisé en ce qu'**il est prévu au moins un passe-partout (23) qui recouvre l'antenne (6) en vue en plan du dispositif (1).

2. Dispositif selon la revendication 1, **caractérisé en ce que** l'antenne (6) est, dans la direction X, agencée à distance du capteur tactile (5), de la zone d'affichage (4) et de l'écran (3).

3. Dispositif selon l'une des revendications précédentes, **caractérisé en ce que** la première et/ou la deuxième couche (14, 15) est/sont réalisée(s) sous la forme d'un film adhésif avec un adhésif transparent et/ou est/sont constituée(s) d'un adhésif liquide ou pâteux et/ou de résine synthétique.

4. Dispositif selon l'une des revendications précédentes, **caractérisé en ce que** la couche adhésive (12, 13 ; 19, 20) est constituée d'une ou de deux films adhésifs.

5. Dispositif selon l'une des revendications précédentes, **caractérisé en ce que** la couche adhésive (12, 13 ; 19, 20) comprend un filtre UV et/ou un filtre IR.

6. Dispositif selon la revendication 1, **caractérisé en ce que** le passe-partout (23) est agencé entre les vitres (10, 11) ou est formé par traitement d'au moins une surface d'au moins une vitre (10, 11).

7. Dispositif selon l'une des revendications précédentes, **caractérisé en ce qu'**au moins une vitre (10, 11) est constituée de verre de sécurité, de verre trempé ou de verre feuilleté.

8. Dispositif selon l'une des revendications précédentes, **caractérisé en ce que** le dispositif (1) comprend en outre au moins un module (21) formant caméra et/ou au moins un capteur de proximité et/ou au moins un capteur de lumière ambiante.

9. Dispositif selon l'une des revendications précédentes, **caractérisé en ce qu'**un cadre (16) est prévu pour les deux vitres (10, 11), l'antenne (6), le capteur tactile (5) et l'écran (3) avec la zone d'affichage (4).

10. Dispositif selon l'une des revendications précédentes, **caractérisé en ce que** l'antenne (6) est agencée dans la direction X à une distance (x) de la zone d'affichage (4) avec la zone visible (28), et **en ce que** dans une direction Y et dans une direction Z, la distance de l'antenne (6) à la zone visible (28) est ≥ 0.

11. Dispositif selon la revendication 10, **caractérisé en ce que** la distance (x) dans la direction X est conçue de manière à être corrélée avec les distances (y, z) dans la direction Y et dans la direction Z.
